# EUROPÄISCHE PATENTSCHRIFT

(11) **EP 3 853 468 B1**
(45) Veröffentlichungstag und Bekanntmachung des Hinweises auf die Patenterteilung: **20.04.2022**
(21) Anmeldenummer: 19739247.5
(22) Anmeldetag: 09.07.2019
(51) Int. Cl.: F03B 1/04

(54) **PELTON-TURBINEN-DÜSE UND HERSTELLUNGSVERFAHREN**
PELTON TURBINE NOZZLE AND PRODUCTION METHOD
BUSE DE TURBINES PELTON ET PROCÉDÉ DE FABRICATION

(30) Priorität: 18.09.2018 DE 102018122801
(43) Veröffentlichungstag der Anmeldung: 28.07.2021
(73) Patentinhaber: Voith Patent GmbH, 89522 Heidenheim (DE)
(72) Erfinder: MACK, Reiner, 89547 Dettingen (DE); GAIRING, Markus, 89073 Ulm (DE)
(74) Vertreter: Voith Patent GmbH - Patentabteilung
(86) Internationale Anmeldenummer: PCT/EP2019/068313
(87) Internationale Veröffentlichungsnummer: WO 2020/057792

(56) Entgegenhaltungen:
- EP-A1- 0 496 181
- EP-B1- 0 496 181
- CH-A5- 601 663
- DE-A1-102014 205 062
- DE-B3-102013 202 533
- SU-A1- 450 900

## Beschreibung

Die vorliegende Erfindung betrifft eine Pelton-Turbinen-Düse und ein Verfahren zur Herstellung einer solchen Düse.

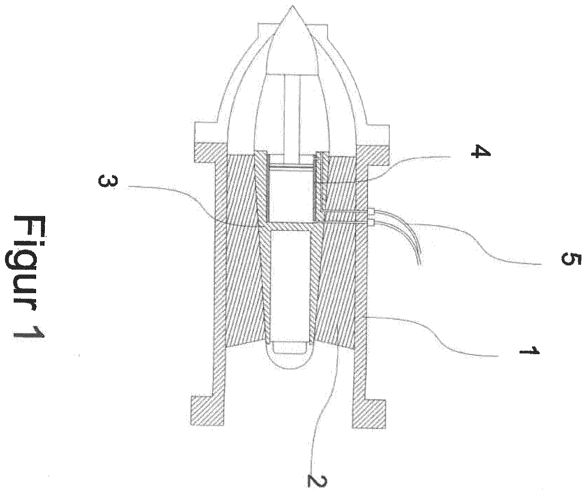

Aus dem Stand der Technik sind Düsen von Pelton-Turbinen bekannt. Hierzu sei beispielhaft auf die DE 10 2013 202 533 B3 verwiesen. Die bekannte Düse und das bekannte Herstellungsverfahren für eine solche Düse weisen eine Reihe von Nachteilen auf, die im Zusammenhang mit Figur 1 diskutiert werden.

Die Erfinder haben sich die Aufgabe gestellt, eine Pelton-Turbinen-Düse und ein Verfahren zur Herstellung einer solchen Düse anzugeben, das diese Nachteile vermeidet.

Die gestellte Aufgabe wird durch eine Pelton-Turbinen Düse mit den Merkmalen von Anspruch 1 und ein Verfahren zur Herstellung einer solchen Düse mit den Merkmalen von Anspruch 4 gelöst. Vorteilhafte Ausführungsformen ergeben sich aus den von diesen Ansprüchen abhängigen Unteransprüchen.

Die erfindungsgemäße Lösung wird nachfolgend anhand von Figuren erläutert. Darin ist im Einzelnen folgendes dargestellt:
- Figur 1: Pelton-Turbinen-Düse gemäß dem Stand der Technik;
- Figur 2: Pelton-Turbinen-Düse in einer ersten Ausführungsform;
- Figur 3: Erfindungsgemäße Pelton-Turbinen-Düse in einer zweiten Ausführungsform;
- Figur 4: Ausschnitt einer erfindungsgemäßen Pelton-Turbinen-Düse in einer dritten Ausführungsform;
- Figur 5: Pelton-Turbinen-Düse in einer vierten Ausführungsform;

Figur 1 zeigt in schematischer Darstellung eine Düse für eine Pelton-Turbine gemäß dem Stand der Technik. Die Düse umfasst ein Hauptgehäuse, welches mit 1 bezeichnet ist, ein Servomotor-Gehäuse, welches im Inneren des Hauptgehäuses 1 angeordnet und mit 3 bezeichnet ist, und wenigstens eine Rippe, welche das Servomotor-Gehäuse 3 mit dem Hauptgehäuse 1 verbindet. Figur 1 zeigt zwei Rippen 2, von denen nur eine mit 2 bezeichnet ist. Das Servomotor-Gehäuse 3 umfasst eine Führungsbuchse, welche den Zylinderraum des Servomotors bildet und mit 4 bezeichnet ist. Im Zylinderraum des Servomotor-Gehäuses 3 münden die Zuleitungen für die Hydraulik-Flüssigkeit, welche mit 5 bezeichnet sind. Dabei durchdringen die Zuleitungen 5 das Hauptgehäuse 1, wenigstens eine Rippe 2, das Servomotor-Gehäuse 3 und die Führungsbuchse 4.

Bei der Herstellung einer Pelton-Düse gemäß dem Stand der Technik, werden das Hauptgehäuse 1, die wenigstens eine Rippe 2 und das Servomotor-Gehäuse 3 miteinander durch Schweißen verbunden. Die Führungsbuchse 4 kann dabei Teil des Servomotor-Gehäuses 3 oder in dasselbe eingelassen sein. Die Zuleitungen 5 entstehen durch mehrere Bohrungen, welche in die durch das Schweißen der genannten Teile entstandene Baugruppe ausgeführt werden. Das Verschweißen der genannten Bauteile und die anschließende Bohrung der Zuleitungen 5 ist ein aufwändiges Verfahren. Das erfindungsgemäße Fertigungsverfahren in seiner allgemeinsten Ausführungsform erlaubt es, die genannte Baugruppe viel einfacher herzustellen.

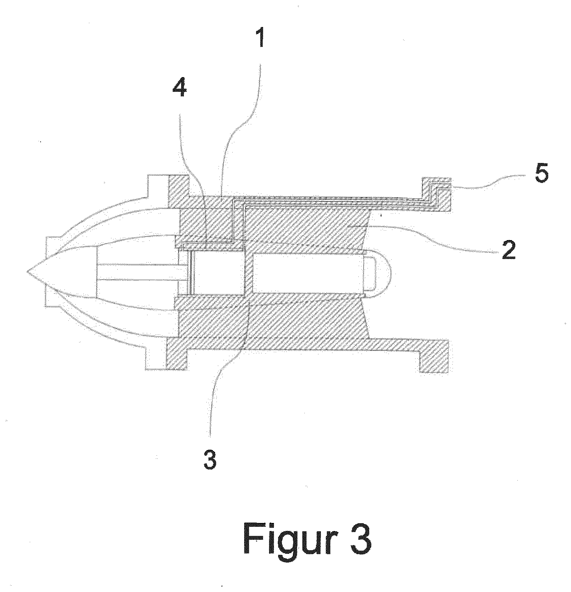

Die Mündungen der Bohrungen für die Zuleitungen 5 müssen gemäß dem Stand der Technik mit druckführenden Leitungen bis zum Verteilerblock der Hydraulikversorgung verbunden werden, wie dies in Figur 1 angedeutet ist. Diese außenliegenden Verbindungsleitungen müssen gegen das Triebwasser, das beim Betrieb der Düse an dieser Stelle auftritt, geschützt werden. Die erfindungsgemäße Düse nach Figur 3 vermeidet den Montageaufwand der Verbindungsleitungen und des Schutzes derselben gegen das Triebwasser.

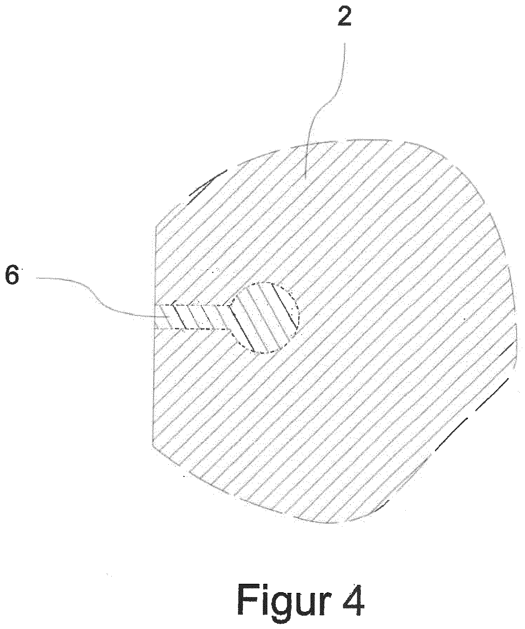

Pelton-Düsen gemäß dem Stand der Technik sind als hochbelastete Bauteile hinsichtlich der Spannungsverteilung nicht optimal. Das betrifft insbesondere die Rippen 2, die das Servomotor-Gehäuse 3 mit dem Hauptgehäuse 1 verbinden. Die Einstellung einer gezielten Nachgiebigkeit der Rippen 2 ist nur über eine Schwächung des Materials z.B. durch Entlastungskerben zu erreichen, was allerdings der vorgegebenen hydraulischen Formgebung der Rippen 2 widerspricht. Die erfindungsgemäße Düse nach Figur 4 vermeidet Spannungsspitzen im Bereich der Rippen 2 ohne Abstriche bei der hydraulischen Effizienz.

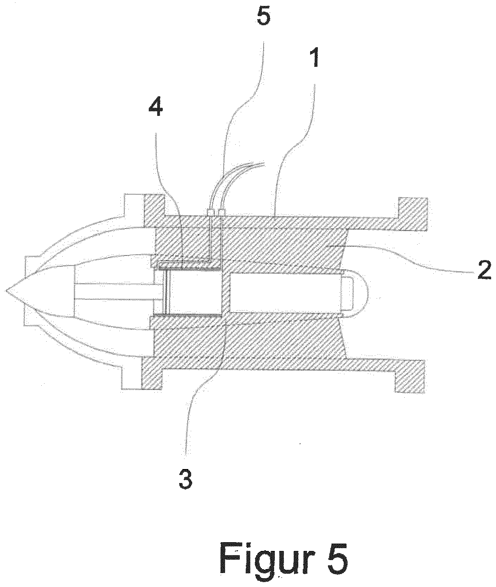

Ein weiteres Problem bei Pelton-Düsen gemäß dem Stand der Technik stellt der erosive Verschleiß dar. So kann beispielsweise Sand in den Zylinderraum des Servomotor-Gehäuses 3 geraten und die Oberfläche der Führungsbuchse 4 zerkratzen, was zu Undichtigkeiten führt und so schließlich den Ausfall der Pelton-Düse verursacht. Diesem Problem kann bei einer Pelton-Düse gemäß dem Stand der Technik dadurch entgegengewirkt werden, dass die Führungsbuchse 4 aus verschleißfesten Materialien gefertigt wird, was jedoch einen erheblichen Aufwand darstellt. Die Düse nach Figur 5 weist demgegenüber einen kostengünstigen Schutz gegenüber dem beschriebenen erosiven Verschleiß auf.

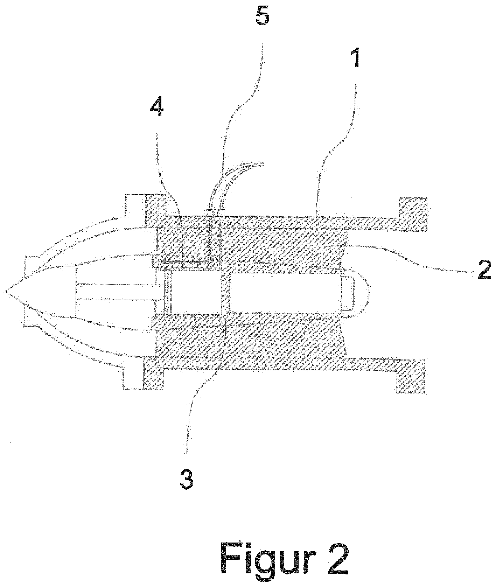

Figur 2 zeigt eine Pelton-Turbinen-Düse in einer ersten Ausführungsform. Die Bezeichnungen entsprechen den Bezeichnungen in Figur 1. Die Düse umfasst eine aus einem Stück mittels einem additiven Fertigungsverfahren erstellte Baugruppe, welche das Hauptgehäuse 1, die wenigstens eine Rippe 2, das Servomotor-Gehäuse 3 und die Führungsbuchse 4 umfasst. Dabei werden die Zuleitungen für die Hydraulik-Flüssigkeit 5 innerhalb dieser Baugruppe nicht durch Bohren erzeugt, sondern dieselben bestehen aus Kanälen, welche beim additiven Fertigen der Baugruppe bereits ausgespart wurden. Somit entfallen gegenüber dem Stand der Technik die Schritte des Zusammenschweißens der genannten Teile und das Bohren der Zuleitungen 5, was den Fertigungsprozess deutlich vereinfacht.

Figur 3 zeigt eine erfindungsgemäße Pelton-Turbinen-Düse in einer zweiten Ausführungsform. Die Bezeichnungen entsprechen den Bezeichnungen in Figur 1. Da die Zuleitungen 5 in der mittels eines additiven Fertigungsverfahrens erstellten Baugruppe nicht durch Bohren erstellt werden, können dieselben frei innerhalb der Baugruppe geführt werden. Figur 3 zeigt eine Führung der Zuleitungen 5, bei welcher dieselben im Bereich des Hauptgehäuses 1 innerhalb desselben verlaufen und in dem Anschlussflansch des Hauptgehäuses 1 münden, welcher von der Düsenspitze abgewandt ist. Die druckführenden mit dem Verteilerblock der Hydraulikversorgung verbundenen Leitungen können so viel weiter von der Düsenspitze entfernt an die Zuleitungen 5 angeschlossen werden. Dadurch sind dieselben viel weniger dem Triebwasser ausgesetzt, was einen entsprechenden Schutz unnötig macht, sodass derselbe entfallen kann. Es gibt eine Vielzahl von anderen Möglichkeiten, wie die Zuleitungen 5 innerhalb der Baugruppe geführter werden können, um den genannten Vorteil zu erzielen. Z.B. können die Zuleitungen 5 auch an der Außenwand des Hauptgehäuses geführt werden, wobei die Zuleitungen 5 optional von einer Art Wulst umschlossen sein können. Die Zuleitungen 5 müssen dabei nicht in der Flanschfläche münden, sondern können auch an der Flanschaußenseite münden. Außerdem müssen die beiden Zuleitungen 5 auch nicht parallel zueinander verlaufen. Es kann beispielsweise je eine Zuleitung 5 je eine unterschiedliche Rippe 2 durchdringen und die Zuleitungen 5 können auch auf unterschiedlichen Seiten des Hauptgehäuses 1 verlaufen. Zur Erzielung des genannten Vorteils ist es lediglich notwendig, dass die Zuleitungen 5 an dem der Düsenspitze abgewandten Ende des Hauptgehäuses 1 münden.

Figur 4 zeigt ein Detail einer erfindungsgemäßen Pelton-Turbinen-Düse in einer dritten Ausführungsform. Figur 4 zeigt einen Teil einer Rippe, welche mit 2 bezeichnet ist. An einer Kante der Rippe 2 befindet sich ein Entlastungselement, welches mit 6 bezeichnet ist. Das Entlastungselement 6 hat in Figur 4 die Form einer Entlastungskerbe, wobei die Kerbe mit einem anderen Material gefüllt ist, als das Material der umgebenden Rippe 2. Wird als Füllmaterial ein Material von höherer Elastizität im Vergleich zu dem umgebenden Material der Rippe 2 gewählt, so kann das Entlastungselement 6 Spannungsspitzen in der Rippe reduzieren, ohne dass dabei die hydraulische Effektivität der Rippe nachteilig beeinflusst wird. Im Prinzip kann das Entlastungselement auch eine andere als in Figur 4 gezeigte Form haben. Zum Erzielen des genannte Vorteils ist es lediglich notwendig, dass das Entlastungselement 6 in eine Rippe 2 eingebettet ist, und das Entlastungselement 6 aus einem Material besteht, das eine höhere Elastizität aufweist als das das Entlastungselement 6 umgebende Material der Rippe 2. Durch das additive Fertigungsverfahren werden die Rippe 2 und das eingebettete Entlastungselement 6 in einem Zug erzeugt. Dabei kann eine Rippe 2 mehrere Entlastungselemente 6 umfassen.

Figur 5 zeigt eine Pelton-Turbinen-Düse in einer vierten Ausführungsform. Die Bezeichnungen entsprechen den Bezeichnungen in Figur 1. Die Düse unterscheidet sich von der Düse aus Figur 2 lediglich darin, dass die Führungsbuchse 4 aus einem verschleißfesten Material besteht. Dabei wird das verschleißfeste Material durch das additive Fertigungsverfahren schon während der schichtweisen Herstellung der Baugruppe appliziert, und muss nicht erst später aufgebracht werden, wie bei einer Düse gemäß dem Stand der Technik. Dadurch ergibt sich ein kostengünstiger Schutz gegenüber erosivem Verschleiß.

Für die Ausführungsformen nach Figur 2 und Figur 3 können alle bekannten additiven Fertigungsverfahren eingesetzt werden, die in der Lage sind, wenigstens ein metallisches Material zu verarbeiten. Gewöhnlich besteht die betreffende Baugruppe aus Stahl. Für die additiven Herstellungsverfahren zum Fertigen einer der Ausführungsformen nach Figur 4 oder Figur 5 ergibt sich die zusätzliche Randbedingung, dass mindestens zwei verschiedene metallische Materialien verarbeitet werden können müssen. Zu den letzteren Herstellungsverfahren zählt beispielsweise die additive Herstellung mittels Laserauftragsschweißens.

Es ist jedoch auch denkbar, dass die Entlastungselemente 6 auch aus einem nichtmetallischen Werkstoff bestehen, z.B. aus Kunststoff, und dass das verschleißfeste Material für die Führungsbuchse 4 beispielsweise ein keramischer Werkstoff ist. In diesem Fall muss das additive Fertigungsverfahren eine Kombination von Metall mit den genannten Werkstoffen ermöglichen.

Abschließend ist zu erwähnen, dass die Ausführungsformen nach den Figuren 3 bis 5 untereinander beliebig kombinierbar sind. Alle diese Kombinationen beinhalten dabei die Merkmale der Ausführungsform nach Figur 2.

## Patentansprüche

1. Pelton-Turbinen-Düse mit einer Düsenspitze und einer Baugruppe, welche ein Hauptgehäuse (1), ein Servomotor-Gehäuse (3) mit einem Zylinderraum und eine Rippe (2) umfasst, welche das Servomotor-Gehäuse (3) mit dem Hauptgehäuse (1) verbindet, wobei das Servomotor-Gehäuse (3) eine Führungsbuchse (4) umfasst, welche den Zylinderraum des Servomotors bildet, und wobei die Baugruppe Zuleitungen (5) für Hydraulik-Flüssigkeit umfasst, welche im Zylinderraum des Servomotors münden und das Hauptgehäuse (1), wenigstens eine Rippe (2), das Servomotor-Gehäuse (3) und die Führungsbuchse (4) durchdringen, **dadurch gekennzeichnet, dass** die Baugruppe in einem Stück mittels einem additiven Fertigungsverfahren hergestellt ist, und die Zuleitungen (5) an dem der Düsenspitze abgewandten Ende des Hauptgehäuses (1) münden.

2. Pelton-Turbinen-Düse nach Anspruch 1, wobei die Rippe (2) ein in die Rippe (2) eingebettetes Entlastungselement (6) zum Abbau von Spannungen umfasst, wobei das Entlastungselement (6) aus einem Material besteht, das eine höhere Elastizität aufweist, als das das Entlastungselement (6) umgebende Material der Rippe (2).

3. Pelton-Turbinen-Düse nach einem der Ansprüche 1 bis 2, wobei die Führungsbuchse (4) aus einem verschleißfesten Material besteht.

4. Verfahren zur Herstellung einer Pelton-Turbinen-Düse gemäß Anspruch 1, **dadurch gekennzeichnet, dass** die Baugruppe aus Hauptgehäuse (1), Rippe (2), Servomotor-Gehäuse (3) und Führungsbuchse (4) in einem Stück mittels einem additiven Fertigungsverfahren hergestellt wird, welches in der Lage ist, wenigstens ein metallisches Material zu verarbeiten.

5. Verfahren zur Herstellung nach Anspruch 4 einer Pelton-Turbinen-Düse gemäß einem der Ansprüche 1 bis 3, wobei das additiven Fertigungsverfahren in der Lage ist, mindestens zwei verschiedene metallische Materialien zu verarbeiten.

6. Verfahren zur Herstellung nach Anspruch 5 einer Pelton-Turbinen-Düse gemäß einem der Ansprüche 1 bis 3, wobei die Baugruppe aus Hauptgehäuse (1), Rippe (2), Servomotor-Gehäuse (3) und Führungsbuchse (4) in einem Stück mittels additivem Laserauftragsschweißen hergestellt wird.

7. Verfahren zur Herstellung nach Anspruch 4 einer Pelton-Turbinen-Düse gemäß einem der Ansprüche 1 bis 3, wobei das additiven Fertigungsverfahren in der Lage ist, einen Kunststoff zu verarbeiten.

8. Verfahren zur Herstellung nach Anspruch 4 einer Pelton-Turbinen-Düse gemäß einem der Ansprüche 1 bis 3, wobei das additiven Fertigungsverfahren in der Lage ist, einen keramischen Werkstoff zu verarbeiten.

## Claims

1. Pelton turbine nozzle with a nozzle tip and an assembly comprising a main housing (1 ), a servomotor housing (3 ) with a cylinder space and a rib (2 ) connecting the servomotor housing (3) to the main housing (1), wherein the servomotor housing (3) comprises a guide bushing (4) forming the cylinder space of the servomotor, and wherein the assembly comprises feed lines (5) for hydraulic fluid which open out in the cylinder space of the servomotor and penetrate the main housing (1), at least one rib (2), the servomotor housing (3) and the guide bushing (4), **characterized in that** the assembly is produced in one piece by means of an additive manufacturing process, and the feed lines (5) open out at the end of the main housing (1) facing away from the nozzle tip.

2. The Pelton turbine nozzle of claim1 , wherein the fin (2) comprises a relief member (6) embedded in the fin (2) for relieving stresses, the relief member (6) being made of a material having a higher elasticity than the material of the fin (2) surrounding the relief member (6).

3. Pelton turbine nozzle according to any one of claims 1 to2 , wherein the guide bushing (4) is made of a wear-resistant material.

4. A method of manufacturing a Pelton turbine nozzle according to claim 1, **characterized in that** the assembly of main housing (1), fin (2), servo motor housing (3) and guide bushing (4) is manufactured in one piece by means of an additive manufacturing process capable of processing at least one metallic material.

5. A method of manufacturing according to claim a Pelton turbine 4nozzle according to any one of claims 1 to3 , wherein the additive manufacturing process is capable of processing at least two different metallic materials.

6. A method of manufacturing according to claim a Pelton turbine 5nozzle according to any one of claims 1 to3 , wherein the assembly of main housing (1), fin (2), servo motor housing (3) and guide bushing (4) is manufactured in one piece by additive laser cladding.

7. A method of manufacturing according to claim a Pelton turbine 4nozzle according to any one of claims 1 to3 , wherein the additive manufacturing process is capable of processing a plastic.

8. A method of manufacturing according to claim a Pelton turbine 4nozzle according to any one of claims 1 to3 , wherein the additive manufacturing process is capable of processing a ceramic material.

## Revendications

1. Buse de turbine Pelton avec une pointe de buse et un ensemble qui comprend un boîtier principal (1), un boîtier de servomoteur (3) avec un espace cylindrique et une nervure (2) qui relie le boîtier de servomoteur (3) au boîtier principal (1), le boîtier de servomoteur (3) comprenant une douille de guidage (4) qui forme l'espace cylindrique du servomoteur, et l'ensemble comprenant des conduites d'alimentation (5) pour le liquide hydraulique, qui débouchent dans l'espace cylindrique du servomoteur et traversent le boîtier principal (1), au moins une nervure (2), le boîtier du servomoteur (3) et la douille de guidage (4), **caractérisé en ce que** l'ensemble est fabriqué en une seule pièce au moyen d'un procédé de fabrication additive, et les conduites d'alimentation (5) débouchent à l'extrémité du boîtier principal (1) opposée à la pointe de la buse.

2. Tuyère de turbine Pelton selon la revendication1 , dans laquelle la nervure (2) comprend un élément de décharge (6) noyé dans la nervure (2) pour réduire les contraintes, l'élément de décharge (6) étant constitué d'un matériau qui présente une élasticité supérieure à celle du matériau de la nervure (2) entourant l'élément de décharge (6).

3. Buse de turbine Pelton selon l'une des revendications 1 à2 , dans laquelle la douille de guidage (4) est constituée d'un matériau résistant à l'usure.

4. Procédé de fabrication d'une tuyère de turbine Pelton selon la revendication 1, **caractérisé en ce que** l'ensemble constitué du corps principal (1), de l'ailette (2), du corps de servomoteur (3) et du manchon de guidage (4) est fabriqué en une seule pièce par un procédé de fabrication additive capable de traiter au moins un matériau métallique.

5. Procédé de fabrication selon la revendication Une 4tuyère de turbine Pelton selon l'une quelconque des revendications 1 à3 , dans lequel le procédé de fabrication additive est capable de traiter au moins deux matériaux métalliques différents.

6. Procédé de fabrication selon la revendication d'une 5tuyère de turbine Pelton selon l'une quelconque des revendications 1 à3 , dans lequel l'ensemble constitué du boîtier principal (1), de la nervure (2), du boîtier de servomoteur (3) et de la douille de guidage (4) est fabriqué en une seule pièce au moyen d'un soudage par rechargement laser additif.

7. Procédé de fabrication selon la revendication Une 4buse de turbine Pelton selon l'une quelconque des revendications 1 à3 , dans lequel le procédé de fabrication additive est capable de traiter une matière plastique.

8. Procédé de fabrication selon la revendication Une 4tuyère de turbine Pelton selon l'une quelconque des revendications 1 à3 , dans lequel le procédé de fabrication additive est capable de traiter un matériau céramique.
